# EUROPÄISCHE PATENTSCHRIFT

(11) **EP 1 917 930 B1**
(45) Veröffentlichungstag und Bekanntmachung des Hinweises auf die Patenterteilung: **24.08.2016**
(21) Anmeldenummer: 07119487.2
(22) Anmeldetag: 29.10.2007
(51) Int. Cl.: A61C 1/00

(54) **Steuervorrichtung für den Antrieb eines Dentalhandstückes**
Control device for driving a dental tool holder
Dispositif de commande pour l'entraînement d'une pièce à main dentaire

(30) Priorität: 31.10.2006 DE 102006051506
(43) Veröffentlichungstag der Anmeldung: 07.05.2008
(73) Patentinhaber: Kaltenbach & Voigt GmbH, 88400 Biberach (DE)
(72) Erfinder: Sauter, Johannes, 88416, Mittelbuch (DE); Bürk, Richard, 88433, Alberweiler (DE)
(74) Vertreter: Thun, Clemens

(56) Entgegenhaltungen:
- EP-A2- 1 639 959
- WO-A1-2004/084754
- DE-A1- 10 219 648
- DE-A1- 19 628 854
- US-A- 5 538 423

## Beschreibung

Die Erfindung betrifft eine Steuervorrichtung für den Antrieb eines Dentalhandstückes.

Steuervorrichtungen für den Antrieb von Dentalhandstücken sind in vielfacher Ausführungsform bekannt Wenn der Antrieb des Dentalhandstückes ein Elektromotor ist, so wird in der Regel der Strom für den Elektromotor und damit seine Leistung gesteuert. Wenn der Antrieb für das Dentalhandstück eine Luftturbine ist, so wird die Menge der der Turbine zugeführten Luft pro Zeiteinheit und damit ebenfalls die Leistung gesteuert. Wenn das Werkzeug des Dentalhandstückes im rotierenden Zustand auf einen Zahn aufgesetzt wird, so muss das Handstück eine gegenüber der Leerlaufleistung erhöhte Leistung beziehungsweise ein größeres Drehmoment aufbringen. Dabei sind die Steuervorrichtungen für Dentalhandstücke normalerweise so ausgelegt, dass auch bei erhöhter Leistung beziehungsweise erhöhtem Drehmoment die Drehzahl möglichst konstant gehalten wird, zumindest jedoch nicht allzu sehr absinkt. Für den Fall, dass der Antrieb für das Dentalhandstück ein Elektromotor ist, kann dies durch eine Drehzahlregelung bewirkt werden.

Nachteilig bei den bisher bekannten Steuervorrichtungen ist, dass der Zahnarzt keine Rückmeldung über die dem Zahn zugeführte Leistung oder das für den Lastbetrieb erforderliche Drehmoment hat. Die Folge ist, dass es zu lokalen Überhitzungen und dadurch zu Schäden am Zahn kommen kann.

Aus der WO 2004/084754 A1 ist eine Steuervorrichtung für den Antrieb eines Dentalhandstücks mit einem Elektromotor bekannt; die Steuervorrichtung verfügt über eine Drehmomentbegrenzung, die den Motor automatisch abschaltet, wenn ein vorab festgelegter Grenzwert festgestellt wird. Eine derartige Umschaltung wird durch ein Warnsignal angezeigt

Aus der DE 102 19 648 A1 ist ein Dentalgerät mit einer Antriebsvorrichtung bekannt, die einen Lastdetektor aufweist, mit dem eine auf ein Schneidwerkzeug der Vorrichtung wirkende Belastung erfasst wird. Eine Lastinformationsvorrichtung dient dabei zum Informieren einer Bedienperson über die erfasste Last mittels eines Signals.

Aus der DE 196 28 854 A1 ist in Motorsteuergerät für ein zahnärztliches Handstück bekannt, bei dem das Erreichen eines Referenzdrehmoments durch ein Signal mitgeteilt wird.

Aus der EP 1 639 959 A2 ist eine zahnärztliche Behandlungsvorrichtung mit variabler Kühlung bekannt, bei der die Spraywassermenge in Abhängigkeit vom erfassten Drehmoment reguliert wird.

Der Erfindung liegt deshalb die Aufgabe zugrunde, den zuletzt geschilderten Nachteil zu vermeiden.

Die Aufgabe ist gelöst durch eine Steuervorrichtung für den Antrieb eines Dentalhandstückes gemäss Anspruch 1.

Durch das optische oder akustische Warnsignal, das im Falle der Überschreitung des Grenzwertes abgegeben wird, wird der Zahnarzt veranlasst, das Drehmoment beziehungsweise die Abtragsleistung zu reduzieren. Das kann der Zahnarzt dadurch, dass er die auf das Handstück ausgeübte Andruckkraft reduziert.

Gemäß einer zweckmäßigen Ausgestaltung der Erfindung können die optischen Anzeigemittel dadurch realisiert werden, dass das Licht der Instrumentenbeleuchtung bei Überschreiten des Grenzwertes pulsiert oder ihre Farbe verändert.

Für den Fall akustischer Anzeigemittel kann eine Realisierung der Erfindungslehre darin bestehen, dass diese als Summer oder Lautsprecher ausgebildet sind, der bei Überschreitung des Grenzwertes ein akustisches Warnsignal abgibt.

Erfindungsgemäss besteht der Gedanke noch darin, dass der Grenzwert eine Funktion der vom Dentalhandstück abgegebenen Spraywassermenge ist. Da bei Zuführung von Spraywasser auf die Bohrstelle die Überhitzungsgefahr vermindert wird, kann der Grenzwert entsprechend höher angesetzt werden. Wenn davon ausgegangen wird, dass die Überhitzung eines Zahnes durch die Zuführung von Spraywasser nur verzögert wird, so kann die Steuervorrichtung auch so eingestellt werden, dass bei Vorwahl einer geringen Spraywassermenge die Warnung früher und bei einer hohen Spraywassermenge die Warnung später erfolgt.

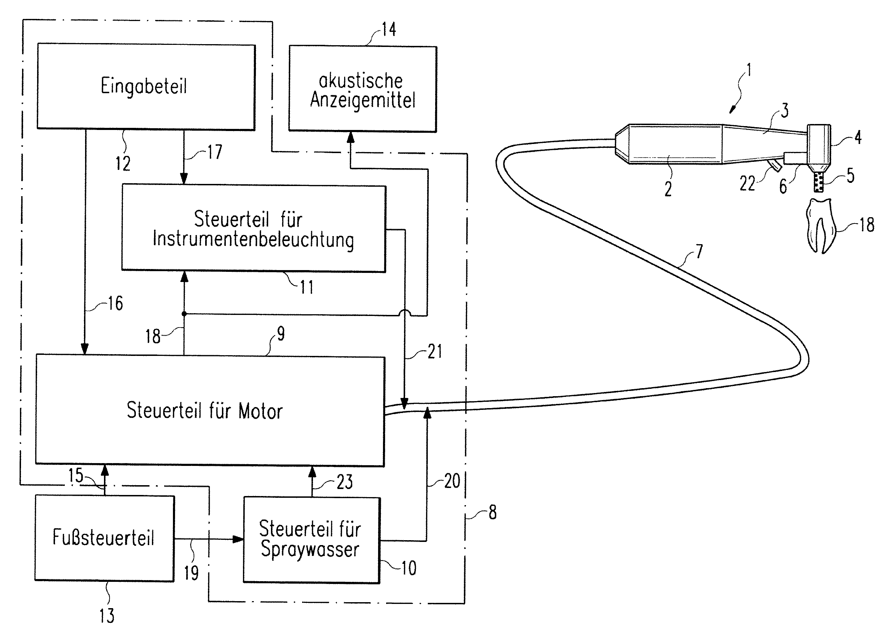

Ein Ausführungsbeispiel der Erfindung wird nachfolgend anhand der Zeichnung beschrieben.

Die Zeichnung zeigt ein Dentalhandstück 1, dessen Antrieb ein Elektromotor 2 ist. Der vordere Handstückteil 3, der auf den Elektromotor aufgesetzt ist, trägt einen Kopf 4, in den ein Werkzeug 5 eingespannt ist. In der Nähe des Kopfes 4 befindet sich an dem vorderen Handstückteil 3 eine die Instrumentenbeleuchtung bildende Lichtquelle 6 zur Beleuchtung der Bohrstelle am Zahn 18. Ferner befindet sich an dem vorderen Handstückteil 3 eine Düse 22, durch die auf die Bearbeitungsstelle am Zahn Spraywasser gesprüht wird, um die Stelle zu kühlen.

Das Dentalhandstück 1 ist über einen Versorgungsschlauch 7 mit einer Steuervorrichtung verbunden. Über den Versorgungsschlauch 7 werden dem Dentalhandstück 1 die Medien zugeführt, die das Dentalhandstück 1 zum Betrieb benötigt. Im Falle eines mit einem Elektromotor betriebenen Dentalhandstückes sind dies der Motorstrom, der für die Instrumentenbeleuchtung erforderliche Strom, Spraywasser und Luft. Falls es sich um ein Dentalhandstück mit Turbinenantrieb handelt, entfällt zumindest der Motorstrom und gegebenenfalls auch der Strom für die Instrumentenbeleuchtung. Notwendig ist in diesem Fall die Zufuhr von Luft, um die Turbine zu betreiben.

Die Steuervorrichtung 8 enthält einen Steuerteil 9 für den Motor, einen Steuerteil 10 für das Spraywasser, einen Steuerteil 11 für die Instrumentenbeleuchtung und einen Eingabeteil 12. Ferner sind ein Fußsteuerteil 13 sowie akustische Anzeigemittel 14 vorgesehen, die außerhalb der Steuervorrichtung 8 angeordnet sein können oder angeordnet sind.

In den Eingabeteil 12 können Grenzwerte für das Drehmoment beziehungsweise die Abtragsleistung eingegeben werden, die an den Steuerteil 9 für den Motor übertragen werden. Ferner können in den Eingabeteil 12 bestimmte Steuerwerte für die Instrumentenbeleuchtung eingegeben werden, die an den Steuerteil für die Instrumentenbeleuchtung übertragen werden. So ist es beispielsweise möglich, durch entsprechende Eingaben in den Eingabeteil 12 festzulegen, ob die Instrumentenbeleuchtung im Falle einer Grenzwertüberschreitung des Drehmomentes oder der Abtragsleistung ein pulsierendes Licht abgibt oder die Farbe ändert. Im Falle von pulsierendem Licht kann die Pulsfrequenz eingegeben werden. Der Strom für die Lichtquelle 6 zur Instrumentenbeleuchtung wird dem Versorgungsschlauch 7 von dem Steuerteil 11 für die Instrumentenbeleuchtung über eine Leitung 16 zugeführt.

Mit einem Fußsteuerteil 13 können variable Steuerdaten bezüglich einer gewünschten Motordrehzahl erzeugt werden, die dem Steuerteil 9 für den Motor zugeführt werden. Durch Betätigung des Fußsteuerteils 13 mit dem Fuß kann demnach der Zahnarzt die Drehzahl beziehungsweise die Abtragsleistung des Dentalhandstückes zwischen Null und dem Grenzwert verändern.

Mit dem Fußsteuerteil 13 können ferner Steuersignale für das Spraywasser erzeugt werden, die dem Steuerteil 10 für das Spraywasser zugeführt werden. In der Regel kann durch Betätigung des Fußsteuerteils 13 auf diese Weise das Spraywasser ein- oder ausgeschaltet werden. Das Spraywasser wird dem Versorgungsschlauch von dem Steuerteil 10 für das Spraywasser über eine Leitung 17 zugeführt.

Der Steuerteil 10 für das Spraywasser meldet ferner dem Steuerteil 9 für den Motor, ob und in welcher Menge der zu bearbeitenden Stelle am Zahn Spraywasser zugeführt wird oder nicht.

Der Steuerteil 9 für den Motor enthält normalerweise eine Reglung für den Motorstrom, um die Drehzahl auch unter Last nicht übermäßig absinken zu lassen. Das bedeutet, dass der Motorstrom bei Belastung ansteigt, um das durch die Belastung erforderliche erhöhte Drehmoment beziehungsweise die dann erhöhte Abtragsleistung erzeugen zu können. Wenn jedoch der in den Eingabeteil 12 eingegebene Grenzwert für das Drehmoment beziehungsweise die Abtragsleistung überschritten wird, so erzeugt der Steuerteil 9 für den Motor entsprechende Warnsignale, die dem Steuerteil 11 für die Instrumentenbeleuchtung und/oder den akustischen Anzeigemitteln 14 zugeführt werden. In diesem Fall erzeugt beispielsweise der Steuerteil 11 für die Instrumentenbeleuchtung einen pulsierenden Beleuchtungsstrom und/oder die von einem Summer oder einem Lautsprecher gebildeten akustischen Anzeigemittel 14 geben ein akustisches Warnsignal ab. Dadurch erkennt der Zahnarzt, dass die Bearbeitungsstelle am Zahn 18 sich überhitzen kann, und er kann den Druck auf das Dentalhandstück reduzieren, um damit auch das Drehmoment beziehungsweise die Abtragsleistung zu reduzieren, derart, dass sie unter den Grenzwert sinkt.

Da die Zufuhr von Spraywasser eine Überhitzung der zu bearbeitenden Stelle am Zahn hinauszögert oder bei dem jeweils gewählten Drehmoment beziehungsweise der Abtragsleistung ganz verhindert, wird für die Erzeugung des Warnsignals die Information berücksichtigt, die dem Steuerteil 9 für den Motor von dem Steuerteil 10 für das Spraywasser zugeführt wird. Das hat dann zur Folge, dass das Warnsignal entweder später oder erst bei einem höheren Drehmoment beziehungsweise einer höheren Abtragsleistung erzeugt wird. Die erste Alternative bedeutet, dass das Warnsignal zeitlich verzögert wird; die zweite Alternative bedeutet, dass der Grenzwert angehoben wird. In beiden Fällen ist also der Grenzwert eine Funktion der von dem Dentalhandstück 1 abgegebenen Spraywassermenge.

In dem beschriebenen Ausführungsbeispiel ist die Steuervorrichtung 8 zum besseren Verständnis in Form von Schaltungsblöcken als Hardware-Lösung beschrieben worden. Es versteht sich jedoch von selbst, dass alle oder ein Teil der Blöcke zu einem einzigen zusammengefasst werden können und die Funktionen durch eine Software-Lösung realisiert werden.

## Patentansprüche

1. Steuervorrichtung für den Antrieb eines Dentalhandstückes mit optischen oder akustischen Anzeigemittel (6; 14) zur Erzeugung eines Warnsignals, die dann in Funktion treten, wenn das auf den zu bearbeitenden Zahn ausgeübte Drehmoment oder die auf den zu bearbeitenden Zahn ausgeübte Abtragsleistung einen vorgegebenen Grenzwert überschreitet,
**dadurch gekennzeichnet,**
**dass** der Grenzwert eine Funktion der vom Dentalhandstück (1) abgegebenen Spraywassermenge ist

2. Steuervorrichtung nach Anspruch 1,
**dadurch gekennzeichnet,**
**dass** die optischen Anzeigemittel (6) dadurch realisiert sind, dass das Licht der Instrumentenbeleuchtung bei Überschreiten des Grenzwertes pulsiert oder die Farbe verändert.

3. Steuervorrichtung nach Anspruch 1,
**dadurch gekennzeichnet,**
**dass** die akustischen Anzeigemittel (14) durch einen Summer oder einen Lautsprecher realisiert sind, der bei Überschreitung des Grenzwertes ein akustisches Warnsignal abgibt

## Claims

1. A control device for the drive of a dental handpiece having visual or acoustic indicator means (6; 14) for the generation of a warning signal, which means come into operation if the torque exerted on the tooth to be worked or the material-removal power exerted on the tooth to be worked exceeds a predetermined limit value,
**characterised in that**
the limit value is a function of the quantity of spray water issued by the dental handpiece (1).

2. A control device according to claim 1,
**characterised in that**
the visual indicator means (6) are realized **in that** the light of the instrument illumination, upon the limit value being exceeded, pulsates or changes colour.

3. A control device according to claim 1,
**characterised in that**
the acoustic indicator means (14) are realized by a buzzer or a loudspeaker which, upon the limit value being exceeded, issues an acoustic warning signal.

## Revendications

1. Dispositif de commande pour l'entraînement d'une pièce dentaire à main avec des moyens d'indication (6 ; 14) optiques ou acoustiques pour la génération d'un signal d'avertissement, lesquels entrent en fonction lorsque le couple exercé sur la dent à traiter ou la puissance d'enlèvement de matière exercée sur la dent à traiter dépasse une valeur limite prescrite,
**caractérisé en ce**
**que** la valeur limite est une fonction de la quantité d'eau de pulvérisation émise par la pièce dentaire à main (1).

2. Dispositif de commande selon la revendication 1,
**caractérisé en ce**
**que** les moyens d'indication (6) optiques sont réalisés du fait que la lumière de l'éclairage des instruments pulse en cas de dépassement de la valeur limite ou modifie la couleur.

3. Dispositif de commande selon la revendication 1,
**caractérisé en ce**
**que** les moyens d'indication (6) acoustiques sont réalisés par un vibreur ou un haut-parleur qui émet un signal d'avertissement acoustique en cas de dépassement de la valeur limite.
